# EUROPEAN PATENT APPLICATION

(11) **EP 2 216 982 A1**
(43) Date of publication of application: **11.08.2010**
(21) Application number: 10250190.5
(22) Date of filing: 04.02.2010
(51) Int. Cl.: H04N 5/00

(54) **Improved television channel switching method and apparatus**

(30) Priority: 10.02.2009 GB 0902136
(71) Applicant: Pace Plc, Saltaire Shipley West Yorkshire BD18 3LF (GB)
(72) Inventor: Degonde, Sylvain, 92152 Suresnes Cedex (FR); Saliou, Benoit, 92152 Suresnes Cedex (FR)
(74) Representative: Hemingway, Christopher Paul

(57) **Abstract**

A broadcast data receiver apparatus and method of use thereof which reduces the perceived time that it takes to change channel by outputting the first I-frame from the newly selected channel as a still image until the data is available to allow the newly selected channel video to be fully displayed.

## Description

The invention to which this application relates is a television system in which a plurality of television channels are available to be selected to be viewed. Television systems may be provided with data via satellite, cable and/or internet broadcast and said data can be processed to generate television and/or radio programmes which, typically, are made available to the user on a range of selectable channels. The current invention relates to a method and apparatus for switching between channels more quickly, and/or providing the appearance of the channels being switched more quickly to a user.

Although the following description refers almost exclusively to switching channels via a broadcast data receiver, it will be appreciated by persons skilled in the art that the present invention can be used in other apparatus with switchable channels.

Broadcast data receivers, also known as set-top boxes, which receive data to generate a plurality of channels for viewing a variety of different television and/or radio programs are well known. Broadcast data relating to each channel is typically in MPEG format, and may contain I-frames (intra-coded reference pictures which are independent of other pictures), P-frames (predictive coded picture containing motion-compensated difference information from the preceding I or P-frame) and B-frames (bidirectionally predictive coded picture containing difference information from the preceding and following I or P-frames). The broadcast data is provided in an encoded format to the broadcast data receiver and then decoded by the same to be displayed to a user via a display screen and/or speakers.

At present when a user wishes to change from a first channel to a second channel such as to view or listen to a different programme, they typically press a button on their remote control to send an infra-red signal to the broadcast data receiver instructing the same. However, when the broadcast data receiver receives the signal, there may be a delay of around three seconds as the new channel is tuned by a tuner in the broadcast data receiver, the initial frames for the new channel are received and decoded, and the resulting video is buffered before it is displayed to the user.

Typically the user is presented with a blank screen during this delay, which provides the perception to the user that their instructions to change the channel have been received by the broadcast data receiver. However, to minimise the period of display of this blank screen, the last displayed frame of the first channel is displayed for a short time as a still image.

Nonetheless, even this delay may be considered undesirable by the user as they still have to wait for a delay of about three seconds before they can view the content of the new channel which can be frustrating, especially if, for example, they have switched channel so as to be able to watch an event which they know is occurring at that time on the new channel.

An aim of the present invention is therefore to provide a method and/or apparatus to reduce the time and/or perceived time that it takes to change and start viewing a different channel.

In an aspect of the invention, there is provided broadcast data receiver apparatus including:
tuning means for selectively tuning to one of a plurality of channels in response to a user selection;
receiving means for receiving broadcast data for the selected channel,
decoding means for decoding the broadcast data;
outputting means for outputting the decoded data for display to a user;
**characterised in that** on selecting a new channel, a video frame generated from the data for the newly selected channel is output for display as a still image until the data to allow the newly selected channel video to be fully displayed is available.

Typically the video frame which is output as a still image is the first I-frame for the newly selected channel. This is preferred as it provides full image data and therefore allows a clear image to be displayed. The first I-frame received and decoded after switching to a new channel is therefore displayed immediately, while the moving video is being buffered.

In an alternative embodiment a still image is held in memory linked to a channel and selected for display when that channel is selected. Typically a different image is provided for each of the selectable channels.

Thus, when a user changes channel, the user is presented with an image from the new channel almost immediately, which thereby provides the perception that the channel is changed more quickly, until full video playback commences.

In addition this overcomes the problem that if moving video for the new channel was displayed immediately rather than displaying the still image of the frame for a short period while the video data is fully received, decoding errors would be observed. Thus the invention provides a cleaner display transition between channels without visually apparent errors in the video being created.

Typically the first I-frame of the new channel is output at a time independent of the presentation time indicated therein.

In one embodiment the first I-frame or other still image for the new channel is output for a period in the range of around 0-3 seconds. Typically the first I-frame or other still image for the new channel is output for around 0.3 seconds. This helps compensate for the period of time it takes to fill the buffer.

In one embodiment a blank signal is output for display of a blank screen to the user prior to the display of the first I-frame or other still image for the new channel. Typically the blank signal is displayed to the user in the form of a black screen.

In one embodiment the blank signal is output for a period in the range of around 0-5 seconds. Typically the blank signal is output for around 1.48 seconds.

The blank signal reinforces the perception that a new channel is being selected.

In one embodiment the last frame displayed of the originally-selected channel is output as a still image for display to the user prior to the blank signal and/or first I-frame of the new channel.

In one embodiment the last displayed frame of the originally-selected channel is an I-frame.

In one embodiment the last frame displayed of the originally-selected channel is output for display for less than around 500ms. Typically the last frame displayed of the originally-selected channel is output for display for around 200ms

Thus, when a user changes channel, the display of the old channel is frozen before displaying the new channel, although for less time than a conventional system such that the user perception is that the channel is changed more quickly.

Typically the video is an MPEG-encoded stream comprising successive groups of pictures (GOPs).

Typically the stream contains I-frames, P-frames and B-frames.

Typically the GOP structure definition includes N frames (the number of frames between I-frames) and M frames (the number of frames between I or P-frames).

Typically N=24 for standard definition video, so there is around 960ms between each I frame, and M=4. Typically N=32 for high definition video.

In one embodiment the GOP structure is variable, and the encoder uses the N and M values as a guideline. The GOP size may therefore be as much as 2.5 times the requested GOP size. Variable mode is preferred due to the tradeoff between the time taken to change channel and coding efficiency.

Typically a video buffering verifier (VBV) ensures that the encoded video stream can be correctly buffered and decoded for playback. Typically the buffer holds around 800ms of frames, but it may hold one second or more of data. The verifier determines when sufficient frames have been buffered to fully display the newly selected channel video.

Typically the bitrate is around 2Mbps for a standard definition H264 stream.

In one embodiment selection means are provided to allow the user to select a new channel. Typically the selection means is provided in the form of a remote control device. Typically the remote control device is in wireless communication with the broadcast data receiver.

In one embodiment the signal to change channel is generated by a user of the apparatus via interaction with the broadcast data receiver for receiving and processing the data, directly or via a remote control unit.

In one embodiment the broadcast data receiver is provided as a standalone unit or integrally with a display screen and/or speaker assembly.

In a further aspect of the invention there is provided a method of changing channels of television and /or radio programming and/or auxiliary information relating thereto; comprising the steps of;
decoding data and outputting video to a display screen for allowing viewing of a first channel;
receiving a signal indicating that a new channel has been selected to be viewed and/or listened to,
tuning to the selected channel;
decoding data and outputting video to the display screen for the selected channel;
   **characterised in that** on tuning to the selected channel, a video frame of the selected channel is output to the display screen as a still image for allowing viewing thereof for a period of time.

Typically the still image is displayed until the moving video of the selected channel is available for output to the display screen.

Typically the video is available for output to the display screen after a sufficient amount of video has been decoded and buffered.

In one embodiment the frame used to create the still image is the first I frame which is received and decoded after tuning to the selected channel.

In one embodiment the method includes the further step of displaying a blank image on the display screen prior to the said video frame of the selected channel.

In one embodiment the method includes the further step of displaying a still image from the first channel in response to receiving the signal to change channel.

In one embodiment the signal to change channel is generated by a user of the apparatus via interaction with the broadcast data receiver for receiving and processing the data, directly or via a remote control unit.

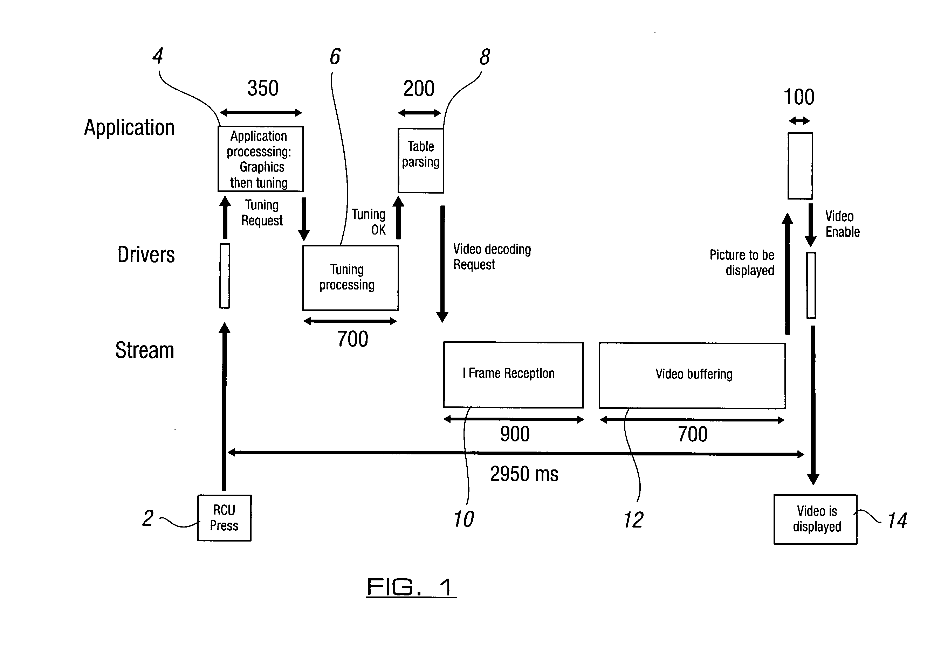

Specific embodiments of the invention are now described wherein:-
Figure 1 illustrates the processes that occur when a channel is changed.
Figure 2 illustrates the order in which frames are decoded and displayed.
Figure 3 illustrates a timeline for the processes that occur when a channel is changed according to the invention.
Figure 4 illustrates the order in which frames are displayed according to the invention.
With reference to Figure 1, there is illustrated the processes that typically occur with respect to time in milliseconds when a user changes a channel on a broadcast data receiver so as to allow the user to stop watching and/or listening to a programme broadcast on a first channel and start watching and/or listening to a programme broadcast on a newly selected channel.
Typically the change or switch of channels is achieved by the user when the user presses the button on their remote control unit 2 to select the new channel. The request is processed 4 by the broadcast data receiver for about 350ms, and the tuner of the broadcast data receiver is controlled 6 to tune to receive data for the new channel.
The tuning processing of 700ms is a conventional duration time that includes 300-350ms of DiSeqC management (the minimum duration for DiSeqC 1.1 protocol is 250ms). If the new channel data is carried and received via the same transponder as the data for the original channel this processing step may be disregarded, which can reduce the overall time taken to change channels.

The signalling table is then acquired 8 to be able to identify and decode the data for the new channel which typically takes approximately 200ms, although this time could be reduced by up to around 50ms by increasing signalling bitrates.

The selected signal data is then received, and reception 10 of I-frames begins and continues for around 900ms, followed by buffering 12 of the encoded video for about 700ms, prior to decode and display 14 of the video to the viewer.

As such, the entire process from when the remote control button is pressed to the display of video from the new channel to the user takes around 2950ms.

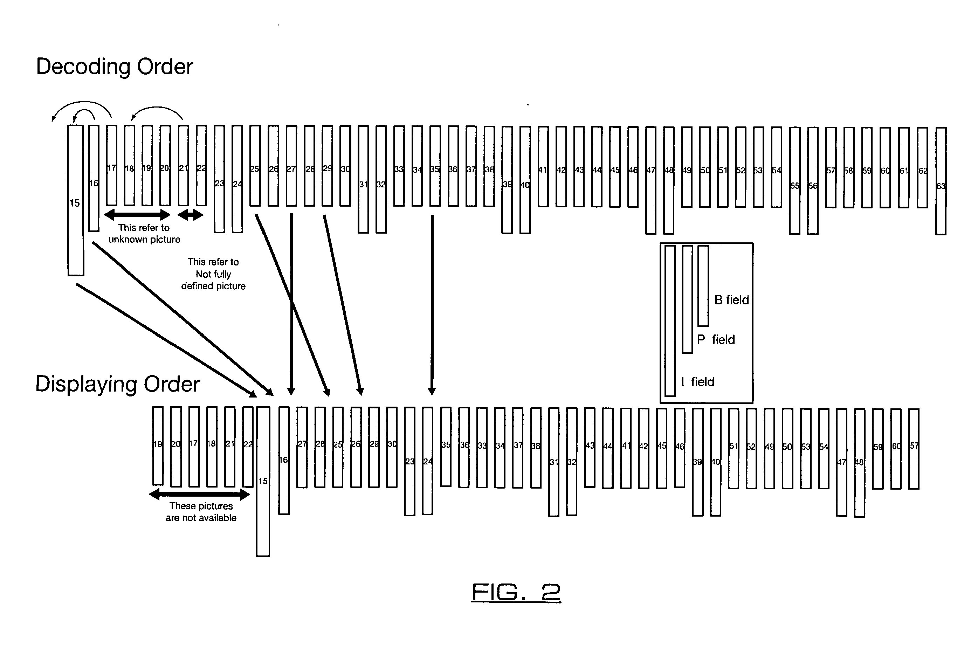

With reference to Figure 2, the manner in which frames are decoded and displayed is illustrated.

Upon the selection and transfer to the new channel the first I-frame 15 is decoded and displayed while the immediate subsequent B-frames 17-22 are discarded. As a result of this sequence adjustment, the frame displayed after I-frame 15 is P-frame 16, followed by B-frames 25-30. The sequence of these B-frames and subsequent sets of B-frames is displayed in a different order to that in which they are decoded in accordance with MPEG specification requirements.

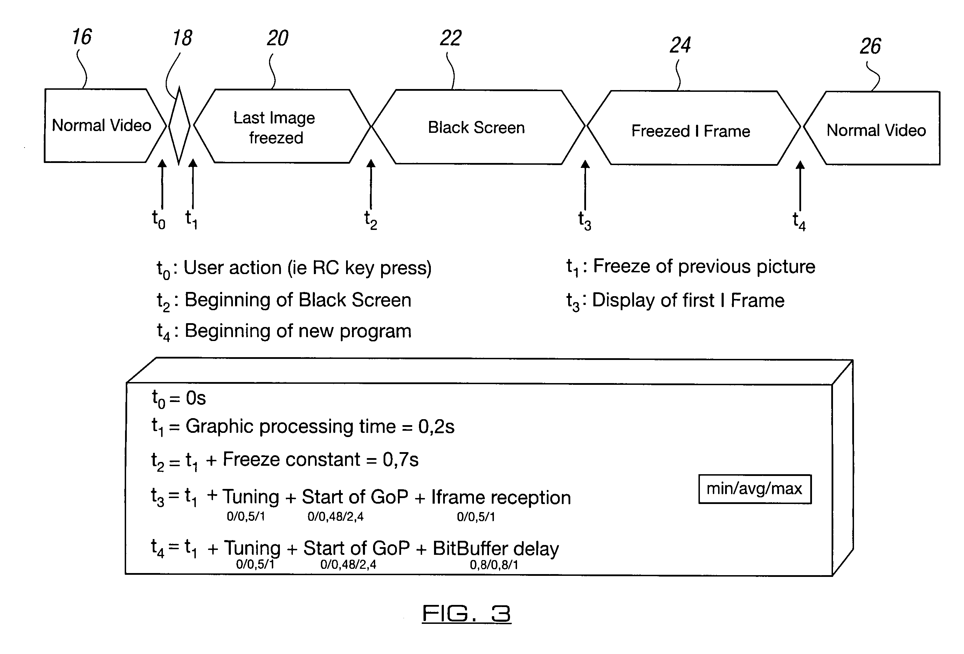

With reference to Figure 3, the timeline for the processes that occur when a channel is changed is illustrated in accordance with the invention.

When a user presses a button on their remote control during the display of normal video 16 at to, the request is processed 18 and after around 200ms at t₁ the last displayed frame of the video is frozen as a still image 20 for around 500ms. At t₂ a blank screen 22, typically black in colour is displayed, reinforcing to the user that the button press has been received and the channel is being switched. During this period the tuning will complete and encoded video data from the new channel will start being received.

As soon as the first I-frame from the new channel is received it will be decoded and displayed as a still image 24 until the subsequently received video stream is buffered and available for decoding and display as a moving video image, whereupon playback of normal video 26 on the new channel starts.

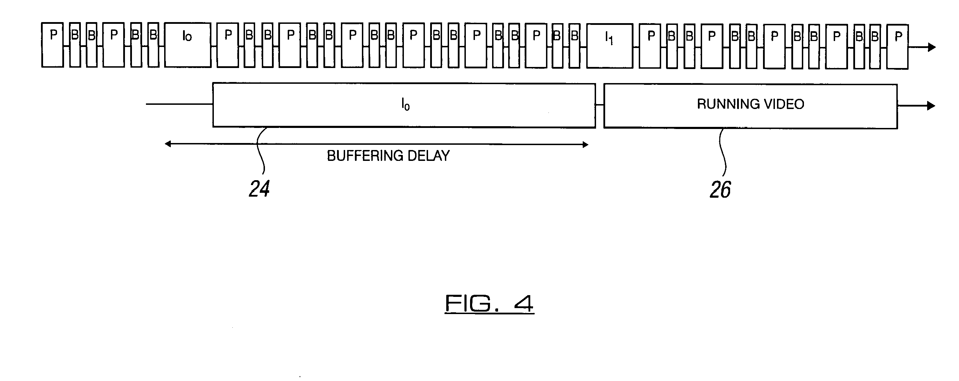

This is illustrated further in Figure 4, in which the first I-frame I₀ of the new channel is displayed 24 while subsequent frames are received. When sufficient frames have been received and buffered as a video stream, normal playback 26 commences, which coincides with the next I-frame I₁ in the example shown.

Thus in accordance with the invention, rather than waiting until the full moving video image is available for viewing for the new channel, data for the new channel is displayed as soon as the first suitable frame, typically the I frame, is available and so the user has sight of video for the new channel much more quickly than a conventional system, and it therefore appears to the user that the channel has been switched more rapidly.

It will be appreciated by persons skilled in the art that the present invention may also include further additional modifications made to the device which does not affect the overall functioning of the device.

## Claims

1. A broadcast data receiver apparatus including:
tuning means for selectively tuning to one of a plurality of channels in response to a user selection;
receiving means for receiving broadcast data for the selected channel,
decoding means for decoding the broadcast data;
outputting means for outputting the decoded data for display to a user;
**characterised in that** on selecting a new channel, a video frame generated from the data for the newly selected channel is output for display as a still image until the data to allow the newly selected channel video to be fully displayed is available.

2. A broadcast data receiver apparatus according to claim 1 wherein the video frame which is output as a still image is the first I-frame received and decoded for the newly selected channel.

3. A broadcast data receiver apparatus according to claim 2 wherein the first I-frame is output at a time independent of the presentation time indicated therein.

4. A broadcast data receiver apparatus according to any previous claim wherein the still image is output for a period in the range of around 0-3 seconds, typically around 0.3 seconds.

5. A broadcast data receiver apparatus according to any previous claim wherein a blank signal is output for display of a blank or black screen to the user prior to the display of the still image.

6. A broadcast data receiver apparatus according to claim 5 wherein the blank signal is output for a period in the range of around 0-5 seconds, typically around 1.48 seconds.

7. A broadcast data receiver apparatus according to any previous claim wherein the last frame displayed of the channel previous to the new channel is output as a still image for display to the user prior to the display of the still image of the new channel.

8. A broadcast data receiver apparatus according to claim 7 wherein the last frame is an I-frame.

9. A broadcast data receiver apparatus according to claim 7 or 8 wherein the last frame is output for display for less than around 0.5 seconds, typically around 0.2 seconds.

10. A broadcast data receiver apparatus according to any one of claims 1 or 4-9 wherein the still image associated with the newly selected channel is stored in memory prior to selection of the new channel.

11. A broadcast data receiver apparatus according to claim 10 wherein a different image is provided for each of the selectable channels.

12. A broadcast data receiver apparatus according to any previous claim wherein a video buffering verifier is provided to determine when sufficient frames have been buffered to fully display the newly selected channel video.

13. A method of changing channels of television and /or radio programming and/or auxiliary information relating thereto; comprising the steps of;
decoding data and outputting video to a display screen for allowing viewing of a first channel;
receiving a signal indicating that a new channel has been selected to be viewed and/or listened to,
tuning to the selected channel;
decoding data and outputting video to the display screen for the selected channel;
**characterised in that** on tuning to the selected channel, a video frame of the selected channel is output to the display screen as a still image for allowing viewing thereof for a period of time.

14. A method according to claim 13 wherein the still image is output to the display screen until the data for the moving video image of the selected channel is available for decoding and output to the display screen.

15. A method according to claim 13 or 14 wherein a still image from the first channel and/or a blank image is output to the display screen prior to outputting the video frame of the selected channel.
